# EUROPEAN PATENT SPECIFICATION

(11) **EP 3 171 635 B1**
(45) Date of publication and mention of the grant of the patent: **11.11.2020**
(21) Application number: 14900188.5
(22) Date of filing: 19.08.2014
(51) Int. Cl.: H04W 36/08, H04W 24/00, H04W 16/32, H04W 36/00, H04W 8/14

(54) **PATH SWITCHING METHOD, MOBILE ANCHOR POINT AND BASE STATION**
WEGSCHALTVERFAHREN, MOBILER ANKERPUNKT UND BASISSTATION
PROCÉDÉ DE COMMUTATION DE TRAJET, POINT D'ANCRAGE MOBILE ET STATION DE BASE

(43) Date of publication of application: 24.05.2017
(73) Proprietor: HUAWEI TECHNOLOGIES CO., LTD., Shenzhen Guangdong 518129 (CN)
(72) Inventor: DAI, Mingzeng, Shenzhen Guangdong 518129 (CN); ZENG, Qinghai, Shenzhen Guangdong 518129 (CN)
(74) Representative: Gill Jennings & Every LLP
(86) International application number: PCT/CN2014/084730
(87) International publication number: WO 2016/026088

(56) References cited:
- CN-A- 101 426 252
- CN-A- 102 223 691
- CN-A- 103 636 257
- US-A1- 2011 116 629
- US-A1- 2011 256 872
- US-A1- 2013 003 697
- SAMSUNG: "Discussion on signaling load reduction", 3GPP DRAFT; R2-133264 SIGNALING LOAD REDUCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 27 September 2013 (2013-09-27), XP050718960, Retrieved from the Internet: URL:http://www.3gpp.org/ftp/tsg_ran/WG2_RL 2/TSGR2_83bis/Docs/ [retrieved on 2013-09-27]
- MEDIATEK INC: "U-Plane Architecture", 3GPP DRAFT; R2-131168 U-PLANE ARCHITECTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago, USA; 20130415 - 20130419 6 April 2013 (2013-04-06), XP050699435, Retrieved from the Internet: URL:http://www.3gpp.org/ftp/tsg_ran/WG2_RL 2/TSGR2_81bis/Docs/ [retrieved on 2013-04-06]
- SAMSUNG: "SIPTOLAMBDAN with a standalone L-GW", 3GPP DRAFT; R3-131032 SIPTOLAMBDAN WITH STANDALONE L-GW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Fukuoka, Japan; 20130520 - 20130524 11 May 2013 (2013-05-11), XP050701066, Retrieved from the Internet: URL:http://www.3gpp.org/ftp/tsg_ran/WG3_Iu /TSGR3_80/Docs/ [retrieved on 2013-05-11]

## Description

### TECHNICAL FIELD

Embodiments of the present invention relate to the communications technologies, and in particular, to a path switching method, a mobility anchor, and a base station.

### BACKGROUND

Data statistics show that 20% of hotspot areas undertake 80% of traffic of an operator. A capacity bottleneck problem in hotspot areas is urgent. A micro base station becomes a new favorite of operators due to low costs, convenient site selection, and simple deployment. With an increase in traffic requirements, micro base stations are more densely deployed. Dense deployment of the micro base stations leads to more frequent path switching when user equipment (User Equipment, UE for short) moves between the micro base stations. Because a path switching procedure of the UE includes path switching between the UE and a micro base station and path switching between the micro base station and a core network device, that is, a target base station needs to send a switch request message to the core network device each time the UE switches a path. With an increase in a quantity of deployed micro base stations, core network signaling load is inevitably extremely large.

A dual connectivity (Dual Connectivity) technology is used in the prior art to enable the UE to simultaneously receive data from a macro base station and a micro base station. The macro base station provides wide coverage to reduce a quantity of switching times, and the micro base station shares a data capacity of a hotspot area. In the dual connectivity technology, user plane data of the UE terminates at the macro base station. When the UE moves between micro base stations, the user plane data of the UE is transparent to a core network. That is, if the UE moves between the micro base stations, the UE needs to switch only a path between the UE and the micro base station, and does not need to switch a path on a core network side. Therefore, core network signaling load is reduced. A prerequisite of the dual connectivity technology is that the UE has at least two receivers and two transmitters and has macro base station coverage. However, in a current network, there are still multiple UEs with a single receiver or a single transmitter; or in some scenarios, there is no macro base station coverage, and therefore, path switching based on the dual-connectivity technology cannot be supported or performed.

In the prior art, because scenarios of performing a path switching solution that is based on the dual-connectivity technology are limited, a problem of high core network signaling load in all scenarios cannot be resolved.

SAMSUNG: "Discussion on signaling load reduction", 3GPP DRAFT; R2-133264 SIGNALING LOAD REDUCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE val. RAN WG2, no. Ljubljana, Slovenia; 20131007- 20131011 27 September 2013 (2013-09-27), discusses techniques for signaling load reduction. MEDIATEK INC: "U-Plane Architecture", 3GPP DRAFT; R2-131168 U-PLANE ARCHITECTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE val. RAN WG2, no. Chicago, USA; 20130415-20130419 6 Apri12013 (2013-04-06), discusses user plane architecture.

US 2013/0003697 relates to method and apparatus for supporting local IP access and selected IP traffic offload. US2011/0116629 relates to methods, apparatuses and computer program products for providing multi-hop cryptographic separation for handovers.

### SUMMARY

Embodiments of the present invention provide a path switching method and a communications system, to resolve a problem of high core network signaling load that cannot be resolved in all scenarios because of limited execution scenarios of the solution in the prior art.

In particular, the present disclosure provides a path switching method according to claim 1 and a communications system according to claim 4. Further technical features are defined in the corresponding dependent claims.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a path switching method according to Embodiment 1 of the present invention;
FIG. 2 is a flowchart of a path switching method according to Embodiment 2 of the present invention;
FIG. 3 is a flowchart of a path switching method according to Embodiment 3 of the present invention;
FIG. 4 is a flowchart of a path switching method according to Embodiment 4 of the present invention;
FIG. 5 is a schematic structural diagram of a mobility anchor according to Embodiment 5 of the present invention;
FIG. 6 is a schematic structural diagram of a base station according to Embodiment 6 of the present invention;
FIG. 7 is a schematic structural diagram of a mobility anchor according to Embodiment 7 of the present invention; and
FIG. 8 is a schematic structural diagram of a base station according to Embodiment 8 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

### Embodiment 1

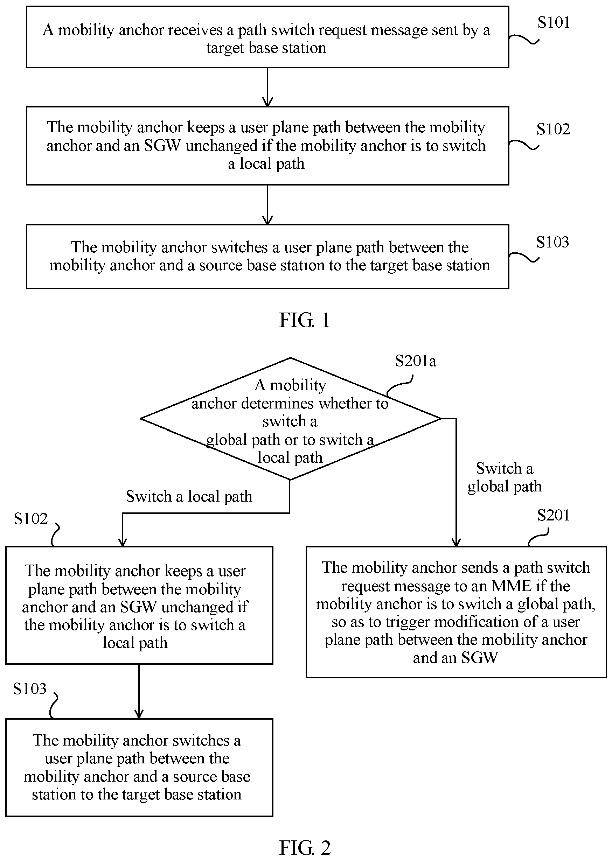

FIG. 1 is a flowchart of a path switching method according to Embodiment 1 of the present invention. The method in this embodiment is applicable to a case in which UE moves in a base station cluster to switch a path. The base station cluster includes at least one base station or cell in a preset area. Base stations or cells in a same base station cluster are connected to a same mobility anchor, and are connected to a core network device such as a mobility management entity (Mobility Management Entity, MME for short) or a serving gateway (Serving Gateway, SGW for short) by using the mobility anchor. Specifically, the base station may be an evolved NodeB (eNode B), a pico base station (Pico), a micro base station (Micro base station), or the like. If the base station is a micro base station, the base station cluster may be a micro base station cluster (Micro base station Cluster). The method in this embodiment may be performed by a mobility anchor. As shown in FIG. 1, the method in this embodiment includes the following steps.

Step 101: A mobility anchor receives a path switch request message sent by a target base station.

The mobility anchor may be an independent device between a base station cluster and a core network device in a form of hardware and/or software and connect the base station cluster to the core network device, or may be an independent module inside any base station in the base station cluster or any core network device. For example, the core network device may be either a mobility management entity (Mobility Management Entity, MME for short) or a serving gateway (serving Gateway, SGW for short). If the mobility anchor is used as an independent device, the base station cluster may be connected to the core network device by using the mobility anchor. Specifically, the mobility anchor may be separately connected to a base station in the base station cluster by using an S1 interface, connected to an MME in the core network device by using an S1-C interface, and connected to an SGW in the core network device by using an S1-U interface. In an example of this embodiment of the present invention, both an interface between the mobility anchor and the base station in the base station cluster and an interface between the mobility anchor and the core network device are S1 interfaces. However, the interfaces may be interfaces of another type, and are not limited to S1 interfaces in this embodiment.

The mobility anchor may be a local mobility anchor, and may be used as a user data transmission bridge between an access network device and the core network device, that is, a user data transmission bridge between a base station and an SGW, to terminate local user data. That is, in a network scenario with the mobility anchor, downlink user data sent by the SGW needs to reach the mobility anchor first, and the mobility anchor determines to forward the downlink user data to a corresponding base station in the base station cluster. The local user data terminated by the mobility anchor may be any user data received by the mobility anchor when the UE moves in the base station cluster. Similarly, for uplink data, a base station in the base station cluster sends the uplink data to the mobility anchor, and then the mobility anchor sends the uplink data to a corresponding SGW.

Therefore, if the UE moves between base stations in the base station cluster, only a local length needs to be switched, that is, a user plane path between the mobility anchor and an original base station connected to the UE is switched to a new base station connected to the UE, that is, a user plane path between a target base station and the mobility anchor, where the original base station connected to the UE is a source base station; a global path does not need to be switched, that is, a user plane path between the mobility anchor and the SGW does not need to be switched. In this way, core network signaling is reduced. The local path refers to a user data transmission channel between the base station and the mobility anchor, and the global path refers to a user data channel between the base station and the SGW. In a scenario in which a mobility anchor is deployed, the global path may include two parts: a user data transmission channel between the base station and the mobility anchor, and a user data transmission channel between the mobility anchor and the SGW.

The mobility anchor is connected to at least one or more complete base station clusters. When the source base station and the target base station are located in a same base station cluster, a global path or a local path is switched according to a requirement. When the source base station and the target base station are located in different base station clusters, it indicates that the UE moves beyond a range of a base station cluster in which the source base station is located, and moves to another base station cluster, and therefore, a global path needs to be switched.

Step 102: The mobility anchor keeps a user plane path between the mobility anchor and an SGW unchanged if the mobility anchor is to switch a local path.

The mobility anchor keeps the user plane path between the mobility anchor and the SGW unchanged. That is, a user plane path between the mobility anchor and the core network device such as the SGW does not need to be switched, and this also means that the mobility anchor keeps a tunnel identifier and a transmission address unchanged, where the tunnel identifier and the transmission address are used for downlink data transmission and allocated to the SGW. That is, if the mobility anchor is to switch a local path, user plane data is transmitted between the mobility anchor and the SGW by using an original tunnel identifier and an original transmission address.

Step 103: The mobility anchor switches a user plane path between the mobility anchor and a source base station to the target base station.

Specifically, that the mobility anchor switches a user plane path between the mobility anchor and a source base station to the target base station means that the mobility anchor switches a user plane path switch between the mobility anchor and the base station, so as to transmit user plane data between the target base station and the mobility anchor. Specifically, the mobility anchor device may reallocate, to the target base station, a tunnel identifier and a transmission address that are used for uplink data transmission, and associate the tunnel identifier and the transmission address that are allocated to the target base station with the UE; or the mobility anchor associates a tunnel identifier and a transmission address that are allocated to the source base station with the target base station. The mobility anchor saves the tunnel identifier and the transmission address that are sent by the target base station for downlink data transmission, and sends downlink data received from the SGW to the target base station according to the tunnel identifier and the transmission address that are used for downlink data transmission.

It should be noted that after a path is switched by using the path switching solution in the solution in this embodiment, downlink user data may be transmitted by the SGW to the mobility anchor, and then transmitted by the mobility anchor to a target base station corresponding to the UE. Correspondingly, uplink user data may be transmitted by the UE to the mobility anchor by using a base station connected to the UE, and then transmitted by the mobility anchor to the SGW.

In a Long Term Evolution (Long Term Evolution, LTE for short) system and a system of a higher version, the S1 interface has two types of signaling flows: a UE-associated (UE-associated) signaling flow and a non-UE associated (non-UE associated) signaling flow. In the solution in this embodiment, the mobility anchor may receive the path switch request message sent by the target base station, determine a path switching type according to the path switch request message, and then perform a corresponding switching procedure according to path switching of the corresponding type. That is, the mobility anchor may terminate the UE-associated signaling flow such as a path switching signaling flow.

In the solution in this embodiment, when switching a local path, the mobility anchor may switch a user plane path between the mobility anchor and the access network device, and does not need to switch a user plane path between the mobility anchor and the core network device. Therefore, a core network path is not switched multiple times, and core network signaling load is reduced.

In addition, because a dual connectivity technology does not need to be used in the solution in this embodiment, the UE may be UE with multiple transmitters and multiple receivers, or may be UE with a single transmitter and a single receiver, and an area of the UE may be covered by a macro base station or may not be covered by a macro base station. That is, the solution in this embodiment is not limited by a UE feature or a macro base station coverage area. Therefore, the solution in this embodiment is not limited by scenarios, and can better reduce core network signaling load.

According to the solution in this embodiment, when switching a local path, a mobility anchor switches a user plane path between the mobility anchor and an access network device, and does not need to switch a user plane path between the mobility anchor and a core network device. Therefore, a core network path is not switched multiple times. In addition, a dual connectivity technology does not need to be used. Therefore, the solution is not limited by a UE feature and a scenario such as a scenario with macro base station coverage, and core network signaling load is better reduced.

### Embodiment 2

Based on the solution in the foregoing embodiment, a path switching method is provided in a solution in this embodiment. FIG. 2 is a flowchart of a path switching method according to Embodiment 2 of the present invention. As shown in FIG. 2, the method further includes the following step:
Step 201: A mobility anchor sends a path switch request message to an MME if the mobility anchor is to switch a global path, so as to trigger modification of a user plane path between the mobility anchor and an SGW.

Specifically, if the mobility anchor is to switch a global path, the mobility anchor not only needs to switch a user plane path between a base station and the mobility anchor, but also needs to switch a path between a core network device and the mobility anchor. If the mobility anchor device determines to switch a global path, the mobility anchor sends the path switch request message to the MME to instruct the MME to trigger switching of the user plane path between the mobility anchor and the core network device such as the SGW. The path switch request message may include a tunnel identifier and a transmission address that are allocated by the mobility anchor and used for downlink data transmission. That the MME triggers switching of the user plane path between the SGW and the mobility anchor may be specifically that the MME sends, to the SGW by using a bearer modification request message sent to the SGW, the tunnel identifier and the transmission address that are allocated by the mobility anchor and used for downlink data transmission, so as to trigger the SGW to switch the path between the SGW and the mobility anchor device. That the SGW switches the path between the SGW and the mobility anchor device may be: performing bearer association on the tunnel identifier and the transmission address that are allocated by the mobility anchor and used for downlink data transmission and a service that is related to UE by using the mobility anchor device, and allocating, to the mobility anchor, a tunnel identifier and a transmission address that are used for uplink data; and sending, by the SGW to the mobility anchor by using a bear modification response message, the tunnel identifier and the transmission address that are allocated to the mobility anchor and used for uplink data. Therefore, paths that are between the SGW and the mobility anchor and that are used for uplink and downlink data transmission are switched, that is, the user plane path between the mobility anchor and the SGW is switched.

It should be noted that, before the MME sends the bearer modification request message to the SGW, the mobility anchor may reallocate, to the SGW, the tunnel identifier, the transmission address, and the like that are used for downlink data transmission, and send the tunnel identifier, the transmission address, and the like to the SGW by using the bearer modification request message.

The mobility anchor further needs to switch a user plane path between the mobility anchor and a source base station to a target base station. A specific implementation process of switching, by the mobility anchor, the user plane path between the mobility anchor and the source base station to the target base station is similar to that in the foregoing embodiment, and details are not described herein.

Based on that described above, in this solution, the method further includes the following step:
Step 201a: The mobility anchor determines whether to switch a global path or to switch a local path.

Specifically, the mobility anchor may perform the determining by determining whether the target base station and the mobility anchor are in a same base station cluster, or perform the determining according to a quantity of switching times in a same base station cluster, or perform the determining according to a switching type indication message that is for a user plane path and that is carried in the path switch request message, so as to determine whether to switch a global path or to switch a local path.

It should be noted that step 201a may be performed before step 201 and/or step 102.

Based on the foregoing solution, in the solution in this embodiment, the mobility anchor may respectively switch corresponding paths according to different path switching types, and trigger switching of the path between the mobility anchor and the core network device only when determining to switch a global path. Therefore, a quantity of path switching times in a core network is reduced, and core network signaling load is relieved.

In the solution in this embodiment, two path switching type determining methods are further provided to further explain and describe the solution in the foregoing embodiment.

Optionally, in the solution 1, the determining, by the mobility anchor, whether to switch a global path or to switch a local path in step 201a in the solution in the foregoing embodiment specifically includes:
determining, by the mobility anchor by comparing a quantity of switching times with a preset threshold, whether to switch a global path or to switch a local path; and
determining, by the mobility anchor, to switch a global path if the quantity of switching times is greater than or equal to the preset threshold; or determining, by the mobility anchor, to switch a local path if the quantity of switching times is less than the preset threshold.

Specifically, the quantity of switching times may be a quantity of times the UE switches a local path when the UE moves in a base station cluster; or the quantity of switching times may be a quantity of times the UE is switched between base stations in a base station cluster or in an area corresponding to the mobility anchor. Specifically, the mobility anchor may record and save the quantity of switching times. An initial value may be 0, and the quantity of switching times may be increased by 1 each time a path is switched; or the quantity of switching times may be increased by 1 each time the UE is switched between base stations. If the quantity of times the UE is switched in the base station cluster is greater than or equal to the preset threshold, the mobility anchor determines to switch a global path, and resets the quantity of switching times to 0. If the quantity of times the UE is switched in the base station cluster is less than the preset threshold, the mobility anchor determines to switch a local path, and the quantity of switching times is increased by 1.

In the solution 2, based on the foregoing solution, the path switch request message includes an access identifier of the UE. The access identifier of the UE is an identifier allocated to the UE by an anchor device connected to the source base station.

Specifically, the access identifier of the UE may be an UE access point identity (UE Access Point Identity, UE AP ID for short). The access identifier of the UE may be a logical identifier allocated to the UE by the anchor device connected to the source base station.

Optionally, the determining, by the mobility anchor, whether to switch a global path or to switch a local path in step 201a in the foregoing solution includes:
determining, by the mobility anchor by retrieving the access identifier of the UE, whether to switch a global path or to switch a local path; and
determining, by the mobility anchor, to switch a global path if the mobility anchor cannot find the UE according to the access identifier of the UE; or determining, by the mobility anchor, to switch a local path if the mobility anchor device finds the UE according to the access identifier of the UE.

The determining, by the mobility anchor by retrieving the access identifier of the UE, whether to switch a global path or to switch a local path is actually: determining, according to whether the source base station and the target base station are located in a same base station cluster, whether to switch a global path or to switch a local path. If the mobility anchor can find the UE according to the access identifier of the UE, it indicates that the anchor device connected to the source base station is a same device as the mobility anchor. That is, both the source base station and the target base station are connected to a same mobility anchor, and this also means that the source base station and the target base station are located in a same base station cluster. In the solution in this embodiment, if the source base station is located in the same base station cluster, the mobility anchor determines to switch a local path. If the source base station is located in a different base station cluster, the mobility anchor device determines to switch a global path.

It should be noted that in the solution in this embodiment, in step 201a, the mobility anchor may determine, in another manner, whether to switch a global path or to switch a local path, for example, perform the determining according to a switching type identifier or an indication message carried in the path switch request message. This is not limited in this embodiment of the present invention.

Based on the foregoing solution, in the solution in this embodiment, a specific global path switching solution based on a mobility anchor is provided, and further, the foregoing embodiment is optimized and described by using different path switching type determining solutions. In this way, the mobility anchor can selectively trigger global path switching according to an actual situation, a quantity of switching times in a core network can be reduced, and total core network signaling load in an entire communications system can be relieved.

### Embodiment 3

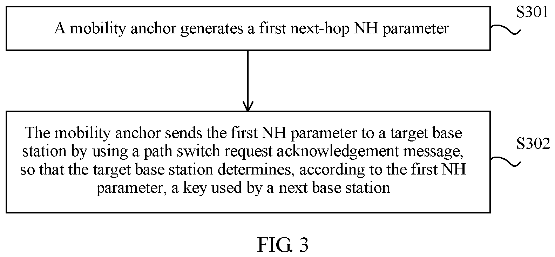

Based on the solution in the foregoing embodiment, a path switching solution is provided in this embodiment. A mobility anchor in the solution in this embodiment may be any mobility anchor in the foregoing embodiments. FIG. 3 is a flowchart of a path switching method according to Embodiment 3 of the present invention. As shown in FIG. 3, the method further includes the following steps.

Step 301: A mobility anchor generates a first next-hop NH parameter.

Specifically, the mobility anchor may generate the first next-hop (Next Hop, NH for short) parameter when performing step 102 and step 103 or after performing step 103. This is not limited in this embodiment.

Step 302: The mobility anchor sends the first NH parameter to a target base station by using a path switch request acknowledgment message, so that the target base station determines, according to the first NH parameter, a key used by a next base station.

The next base station is a base station other than a source base station and the target base station.

Specifically, the path switch request acknowledgment message may be a path switch request acknowledge message. The determining, by the target base station according to the first NH parameter, a key used by a next base station may be specifically: obtaining, by the target base station, the key according to the first NH parameter by using a key derivation function (Key Derivation Function, KDF for short). The key used by the next base station may be a key used for derivation integrity protection and/or used as a data encryption key. The determining, by the target base station according to the first NH parameter, a key used by a next base station is: obtaining, by the target base station, the key by means of longitudinal derivation of a security key. Therefore, security of using the key by a legal base station after switching is ensured, and a rogue base station is prevented from using the key.

It should be noted that the determining, by the target base station according to the first NH parameter, a key used by a next base station may be: obtaining, by the target base station, the key according to parameters such as the first NH parameter, a physical-layer cell identity (Physical-layer Cell Identity, PCI for short), and an evolved absolute radio frequency channel number (the Evolution of the Absolute Radio Frequency Channel Number, EARFCN for short) by using the KDF. Specifically, the EARFCN may be a downlink radio frequency channel number.

Because the parameter, that is, the first NH parameter, used by the target base station to determine the key used by the next base station is generated by the mobility anchor, the first NH parameter is unknown to the source base station. Therefore, an attacker is unable to learn the first NH parameter and the key used by the next base station even if the key used by the source base station is cracked by the attacker or even if the source base station is a rogue base station. That is, the attacker can hardly learn a derivation solution, provided in the solution in this embodiment, of the key used by the next base station.

Based on any one of the foregoing solutions for reducing core network signaling load, in the solution in this embodiment, because the first NH parameter used for determining the key used by the next base station is generated by the mobility anchor, the first NH parameter is unknown to an access network side of the UE, especially to the source base station. Therefore, the key used by the next base station can hardly be learned by the attacker, forward security between the UE and the base station after switching is ensured, and secure air interface communication between the UE and the base station is better ensured.

Based on the solutions in the foregoing embodiments, in the solution in this embodiment, optionally, the generating, by a mobility anchor device, a first next-hop NH parameter in step 301 in the foregoing solution specifically includes:
generating, by the mobility anchor, the first NH parameter according to an access security management entity key and a first synchronous input parameter.

Specifically, the access security management entity key (Key Access Security Management Entity, Kasme for short) may be specifically a key generated by the UE and a home subscriber server (Home Subscriber Server, HSS for short) according to a cipher key (Cipher Key, CK for short) and an integrity key (Integrity Key, IK for short) in an authentication and key agreement (Authentication and Key Agreement, AKA for short) process.

The first synchronous input (Synchronous-Input, SYNC-input for short) parameter may be generated by the mobility anchor, or may be sent by another network element device to the mobility anchor. The SYNC-input parameter may include a first source base station key and a second NH parameter.

The first source base station key may be an initial key of the source base station, and is denoted by KeNB. The second NH parameter may be an initial NH parameter of the source base station in the base station cluster.

Further, before the receiving, by a mobility anchor device, a path switch request message sent by a target base station in step 101 in the foregoing solution, the method further includes:
receiving, by the mobility anchor device, the access security management entity key, the first source base station key, and the second NH parameter that are sent by the MME, where
Kₐₛₘₑ may be sent by the HSS by using an S6a interface and received by the MME, and the first source base station key and the second NH parameter are parameters generated by the MME; and
sending, by the mobility anchor, the second NH parameter to the source base station, so that the source base station determines, according to the second NH parameter, a key used by the target base station.

Specifically, the mobility anchor may save the Kₐₛₘₑ, the first source base station key, and the second NH parameter that are received, and associate the parameters with corresponding identifiers of the UE. After determining to switch a local path, the mobility anchor device regenerates the first NH parameter according to the parameters while or after switching the user plane path between the mobility anchor device and the source base station to the target base station, and sends the second NH parameter to the source base station.

The key used by the target base station may be a key used for communication between the target base station and the UE after the mobility anchor switches the user plane path between the mobility anchor and the source base station to the target base station, and may be denoted by K_{eNB*}.

Optionally, in the foregoing solution, the receiving, by the mobility anchor, the access security management entity key, the first source base station key, and the second NH parameter that are sent by the MME specifically includes:
receiving, by the mobility anchor, the access security management entity key, the first source base station key, and the second NH parameter that are sent by the MME by using an initial context setup request message.

Specifically, the initial context setup request message may be an initial context setup request message, and may be sent by the MME by using an S1-C interface and received by the mobility anchor.

Correspondingly, the sending, by the mobility anchor, the second NH parameter to the source base station may include:
adding, by the mobility anchor, the second NH parameter to the initial context setup request message, and forwarding the initial context setup request message to the source base station by using an S1 interface.

In the foregoing solution, the first source base station key is determined by the MME according to the access security management entity key and a non-access stratum counter.

The second NH parameter is determined by the MME according to the access security management entity key and a second synchronous input parameter.

Specifically, the non-access stratum counter may be a counter corresponding to a non-access stratum message. That is, a value of the access stratum counter may be a quantity of non-access stratum messages sent by the MME.

The second synchronous input parameter may be an initial synchronous input parameter, and the initial synchronous input parameter may be all 0s or all Is or a specified value.

The solution in this embodiment is specifically explained and described by using a solution of generating, by the mobility anchor, the first NH parameter according to the access security management entity key and the first synchronous input parameter. Therefore, security of the first NH parameter generated by the mobility anchor is better ensured, and forward security between the UE and the base station is ensured.

Based on the solution in the foregoing embodiment, optionally, the method further includes:
generating, by the mobility anchor, a first next-hop chaining counter (NH Chaining Counter, NCC for short) in an incremental manner.

A value of the first NCC is in one-to-one correspondence with the first NH parameter. The mobility anchor may perform the step of generating the first NCC when generating the first NH parameter, that is, in step 301, or perform the step of generating the first NCC after generating the first NH parameter, so as to obtain the first NCC corresponding to the first NH parameter. The value of the first NCC represents a quantity of times of updating an NCC by the mobility anchor. Because the NCC needs to be updated each time the UE switches a path, in the solution in this embodiment, the first NCC may also be used to represent a quantity of times the UE is switched in the base station cluster.

The mobility anchor sends the first NCC to the target base station by using the path switch request acknowledgment message, so that the target base station sends the first NCC to the UE, and the UE determines the first NH parameter according to the first NCC and then determines, according to the first NH parameter, the key used by the next base station.

The mobility anchor may add the first NH parameter and the first NCC parameter to the path switch request acknowledgment message in step 302, and then send the path switch request acknowledgment message to the target base station. Considering transmission security, the first NH parameter cannot be transmitted between the UE and the base station, and therefore, the target base station may send the first NCC to the UE. After receiving the first NCC, the UE may determine the first NH parameter according to a correspondence between the first NCC and the first NH parameter, and then determine, according to the first NH parameter, the key used by the next base station. With reference to the solution in the foregoing embodiment, both the target base station and a UE side may determine, according to the first NH parameter, the key used by the next base station. It should be noted that, in the foregoing solution, the target base station further needs to send, before a path is switched next time, a key used by the target base station to determine the next base station to a base station to which the UE is to be switched. Therefore, both the UE and the base station have a same key after the UE switches a path again, so that communication security between the UE and the base station is better ensured.

Further, the generating, by the mobility anchor, a first next-hop chaining counter NCC in an incremental manner specifically includes:
adding, by the mobility anchor, 1 to a second NCC to generate the first NCC.

Correspondingly, before the receiving, by a mobility anchor, a path handover request message sent by a target base station in step 101, the method further includes:
receiving, by the mobility anchor, the second NCC sent by the MME by using the initial context setup request message.

Specifically, the mobility anchor may receive the second NCC sent by the MME when the MME sends the access security management entity key, the first source base station key, and the second NH parameter by using the initial context setup request message.

Based on the foregoing solution, in this embodiment, specifically, the NCC is further updated and the updated NCC is sent to the UE, so that air interface transmission of a key parameter is avoided, and communication security between the UE and the base station after switching is better ensured.

Optionally, the generating, by the mobility anchor, the first NH parameter in step 301 in the foregoing solution specifically includes:
generating, by the mobility anchor, the first NH parameter according to a second source base station key and a random number.

Unpredictability of the random number leads to uncertainty of the first NH parameter that is generated by the mobility anchor according to the second source base station key and the random number, so that the first NH parameter can hardly be learned by a rogue base station, and forward security between the UE and the base station can be better ensured.

Further, before the receiving, by a mobility anchor, a path switch request message sent by a target base station in step 101 in the foregoing solution, the method further includes:
receiving, by the mobility anchor, the second source base station key sent by the MME.

Optionally, the second source base station key is determined by the MME according to an access security management entity key and a non-access stratum counter; or
the second source base station key is determined by the MME according to the access security management entity key and an identifier of the mobility anchor device.

It should be noted that the access security management entity key and the non-access stratum counter in the solution in this embodiment may be those described in Embodiment 3, and details are not described herein.

In solution in this embodiment, a solution of generating, by a mobility anchor, a first NH parameter according to a second source base station key and a random number, and how to obtain the second source base station key and these parameters are specifically explained and described. Therefore, uncertainty of the first NH parameter can be improved, and further, security of a key that is used by a next base station and determined based on the first NH is better ensured, and forward security between UE and a base station is ensured.

### Embodiment 4

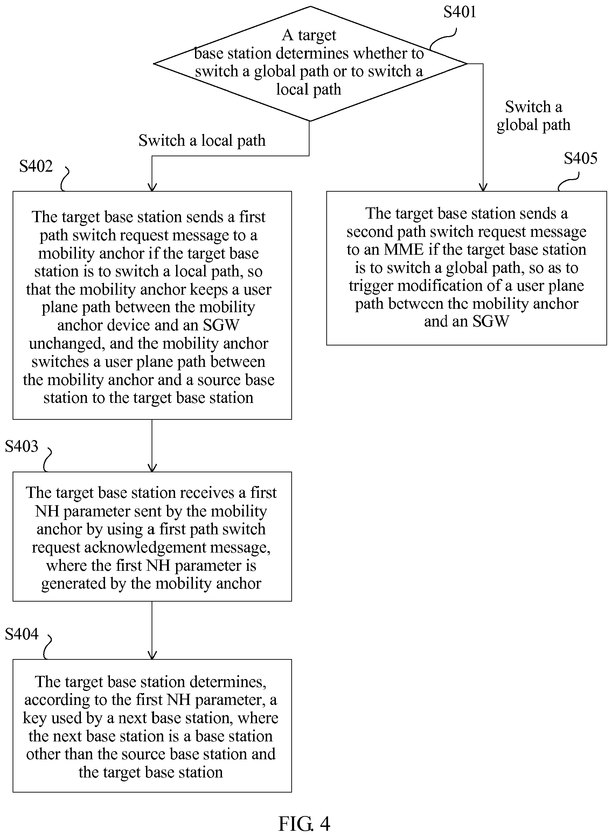

A path switching method is provided in this embodiment. The method may be performed by a target base station. FIG. 4 is a flowchart of a path switching method according to Embodiment 4 of the present invention. As shown in FIG. 4, the method specifically includes the following steps.

Step 401: A target base station determines whether to switch a global path or to switch a local path.

Step 402: The target base station sends a first path switch request message to a mobility anchor if the target base station is to switch a local path, so that the mobility anchor keeps a user plane path between the mobility anchor device and an SGW unchanged, and the mobility anchor switches a user plane path between the mobility anchor and a source base station to the target base station.

The solution in this embodiment differs from the path switching method provided in Embodiment 1 in that, in this solution, the target base station may determine a path switching type, that is, global path switching or local path switching, and send the first path switch request message to the mobility anchor if a local path is to be switched. The first path switch request message may include an indication message corresponding to local path switching. After receiving the first path switch request message, the mobility anchor may trigger performing of the local path switching solution without a need to determine a path switching type again. A specific implementation process of switching a local path by the mobility anchor may be similar to that in Embodiment 1, and details are not described herein.

According to the solution in this embodiment, the target base station determines the path switching type. Therefore, after determining to switch a local path, the target base station sends the first path switch request message to the mobility anchor, where the message may include a local path switching indication, so as to trigger the mobility anchor to switch a user plane path between the mobility anchor and an access network device without a need to switch a user plane path between the mobility anchor and a core network device. Therefore, a core network path is not switched multiple times. In addition, a dual connectivity technology does not need to be used. Therefore, the solution is not limited by a UE feature and a scenario such as a scenario with macro base station coverage, and core network signaling load is better reduced.

Optionally, the determining, by a target base station, whether to switch a global path or to switch a local path in step 401 is specifically:
determining, by the target base station by comparing a quantity of switching times with a preset threshold, whether to switch a global path or to switch a local path; and
determining, by the target base station, to switch a global path if the quantity of switching times is greater than or equal to the preset threshold; or determining, by the target base station, to switch a local path if the quantity of switching times is less than the preset threshold.

Specifically, a specific implementation process of determining, by the target base station according to the quantity of switching times and the preset threshold, whether to switch a global path or to switch a local path, and explanation and description thereof are similar to the solution, in the foregoing embodiment, of performing determining by the mobility anchor according to the quantity of switching times and the preset threshold, and details are not described herein. The only difference lies in an execution body.

Further, before the determining, by a target base station, whether to switch a global path or to switch a local path in step 401 in the foregoing solution, the method may further include:
receiving, by the target base station, a switch request message sent by the source base station, where the switch request message includes an identifier of an anchor connected to the source base station.

Specifically, the switch request message may be a handover request message.

Optionally, the determining, by a target base station, whether to switch a global path or to switch a local path in step 401 in the foregoing solution further includes:
determining, by the target base station by comparing the identifier of the anchor connected to the source base station with an identifier of the mobility anchor, whether to switch a global path or to switch a local path; and
determining, by the target base station, to switch a local path if the identifier of the anchor connected to the source base station is the same as the identifier of the mobility anchor; or determining, by the target base station, to switch a global path if the identifier of the anchor connected to the source base station is different from the identifier of the mobility anchor.

Specifically, according to the solution in this embodiment, whether the identifier of the anchor connected to the source base station is the same as the identifier of the mobility anchor is compared, so as to determine whether the source base station and the target base station are connected to a same anchor device, and further determine whether the source base station and the target base station are located in a same base station cluster. If the identifier of the anchor connected to the source base station is the same as the identifier of the mobility anchor, the target base station and the source base station are located in a same base station cluster, and the target base station determines to switch a local path. If the identifier of the anchor connected to the source base station is different from the identifier of the mobility anchor, the target base station and the source base station are located in different base station clusters, and the target base station determines to switch a global path.

Optionally, the switch request message includes an identifier of a base station cluster in which the source base station is located.

Correspondingly, the determining, by a target base station, whether to switch a global path or to switch a local path in step 401 in the foregoing solution may specifically include:
determining, by the target base station by comparing the identifier of the base station cluster in which the source base station is located with an identifier of a base station cluster in which the target base station is located, whether to switch a global path or to switch a local path; and
determining, by the target base station, to switch a local path if the identifier of the base station cluster in which the source base station is located is the same as the identifier of the base station cluster in which the target base station is located; or determining, by the target base station, to switch a global path if the identifier of the base station cluster in which the source base station is located is different from the identifier of the base station cluster in which the target base station is located.

Specifically, the identifier of the base station cluster in which the source base station is located may be denoted by location information of an area in which the source base station is located, and an identifier of a base station cluster to which the mobility anchor is connected may be denoted by location information of an area in which the mobility anchor is located. If the identifier of the base station cluster in which the source base station is located is the same as the identifier of the base station cluster in which the target base station is located, it indicates that the target base station and the source base station are located in a same base station cluster. If the identifier of the base station cluster in which the source base station is located is different from the identifier of the base station cluster in which the target base station is located, it indicates that the target base station and the source base station are located in different base station clusters.

In the solution in this embodiment, multiple implementable manners of the solution in the foregoing embodiment are further provided by using multiple methods for determining a path switching type, so that the path switching solution provided in this embodiment can be more widely applied.

Based on the solution in the foregoing embodiment, optionally, the solution in this embodiment further includes the following steps.

Step 403: The target base station receives a first NH parameter sent by the mobility anchor by using a first path switch request acknowledgment message, where the first NH parameter is generated by the mobility anchor.

Step 404: The target base station determines, according to the first NH parameter, a key used by a next base station, where the next base station is a base station other than the source base station and the target base station.

Optionally, in the foregoing solution, the first NH parameter is a parameter obtained by the mobility anchor according to an access security management entity key and a first synchronous input parameter; the first synchronous input parameter includes a first source base station key and a second NH parameter; and the access security management entity key, the first source base station key, and the second NH parameter are sent by an MME and received by the mobility anchor.

Further, the access security management entity key, the first source base station key, and the second NH parameter are sent by the MME by using an initial context setup request message and received by the mobility anchor.

In the foregoing solution, the first source base station key is determined by the MME according to the access security management entity key and a non-access stratum counter.

The second NH parameter is determined by the MME according to the access security management entity key and a second synchronous input parameter.

Optionally, the method described in the foregoing solution further includes:
receiving, by the target base station, a first NCC sent by the mobility anchor by using the first path switch request acknowledgment message, where the first NCC is generated by the mobility anchor in an incremental manner.

The target base station sends the first NCC to the UE, so that the UE determines the first NH parameter according to the first NCC, and determines, according to the first NH parameter, the key used by the next base station.

It should be noted that the step of receiving the first NCC by the target base station may be performed simultaneously with step 403, and the step of sending the first NCC to the UE by the target base station may be performed simultaneously with step 404 or before or after step 404. This is not limited in this application.

Optionally, the first NCC in the foregoing solution is generated by the mobility anchor by adding 1 to a second NCC.

The second NCC may be sent by the MME by using the initial context setup request message and received by the mobility anchor.

Alternatively, the first NH parameter in the foregoing solution may be a parameter determined by the mobility anchor according to a second source base station key and a random number.

Based on the foregoing solution, the second source base station key may be determined by the MME according to an access security management entity key and a non-access stratum counter; or
the second source base station key is determined by the MME according to the access security management entity key and an identifier of the mobility anchor.

According to the solution in this embodiment, the target base station may obtain, according to NH parameters that are generated by the mobility anchor and are in different formats, the key used by the next base station. Security of the key used by the next base station is ensured due to unpredictability of the NH parameter to a rogue base station, and therefore, forward security between the UE and a base station is ensured.

Based on the foregoing solution in this embodiment, the method may further include the following step.

Step 405: The target base station sends a second path switch request message to an MME if the target base station is to switch a global path, so as to trigger modification of a user plane path between a mobility anchor and an SGW.

Optionally, the solution further includes:
receiving, by the target base station, a third NH parameter sent by the MME by using a second path switch request acknowledgment message, where the third NH parameter is generated by the MME; and
determining, by the target base station according to the third NH parameter, the key used by the next base station, where the next base station is a base station other than the source base station and the target base station.

It should be noted that the third NH parameter is similar to the first NH parameter generated by the mobility anchor in the solution in the foregoing embodiment, and may be generated by the MME according to the access security management entity key and the first synchronous input parameter, or may be generated according to the second source base station key and a random number. The access security management entity key, the first synchronous input parameter, the second source base station key, and the random number may be similar to those in the foregoing embodiment, and details are not described herein.

According to the solution in this embodiment, a target base station determines a path switching type. Therefore, when a local path is to be switched, a first path switch request message is sent to a mobility anchor to trigger the mobility anchor to switch a user plane path between the mobility anchor and an access network device, and does not need to switch a user plane path between the mobility anchor and a core network device. When a local path is to be switched, a second path switch request message is sent to the mobility anchor to trigger global path switching. According to the solution in this embodiment, a global path can be switched selectively, so that a core network path is not switched multiple times. In addition, a dual connectivity technology does not need to be used. Therefore, the solution is not limited by a UE feature and a scenario such as a scenario with macro base station coverage, and core network signaling load is better reduced.

### Embodiment 5

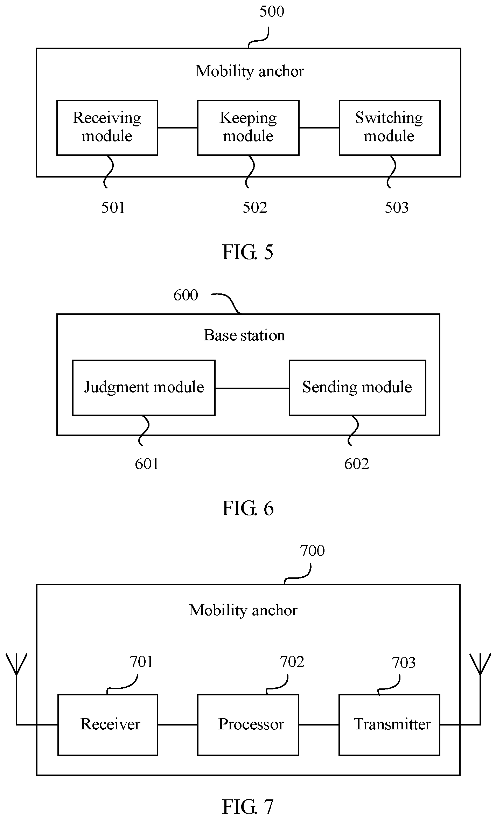

A mobility anchor is provided in Embodiment 5 of the present invention. FIG. 5 is a schematic structural diagram of a mobility anchor according to Embodiment 5 of the present invention. As shown in FIG. 5, the mobility anchor 500 includes:
a receiving module 501, configured to receive a path switch request message sent by a target base station;
a keeping module 502, configured to keep a user plane path between the mobility anchor 500 and an SGW unchanged if a local path is to be switched; and
a switching module 503, configured to switch a user plane path between the mobility anchor 500 and a source base station to the target base station.

In the foregoing solution, the mobility anchor 500 further includes:
a sending module, configured to send the path switch request message to an MME if a global path is to be switched, so as to trigger modification of the user plane path between the mobility anchor 500 and the SGW.

Optionally, the mobility anchor 500 further includes:
a judgment module, configured to determine whether to switch a global path or to switch a local path.

Based on the solution in the foregoing embodiment, further, the judgment module is specifically configured to: determine, by comparing a quantity of switching times with a preset threshold, whether to switch a global path or to switch a local path, and determine to switch a global path if the quantity of switching times is greater than or equal to the preset threshold, or determine to switch a local path if the quantity of switching times is less than the preset threshold.

Further, the path switch request message in the foregoing solution includes an access identifier of UE, and the access identifier of the UE is an identifier allocated to the UE by an anchor device connected to the source base station.

Alternatively, the judgment module is further configured to: determine, by retrieving the access identifier of the UE, whether to switch a global path or to switch a local path, and determine to switch a global path if the UE cannot be found according to the access identifier of the UE, or determine to switch a local path if the UE is found according to the access identifier of the UE.

Based on the solution in the foregoing embodiment, the mobility anchor 500 further includes:
a generation module, configured to generate a first NH parameter.

The sending module is further configured to send the first NH parameter to the target base station by using a path switch request acknowledgment message, so that the target base station determines, according to the first NH parameter, a key used by a next base station. The next base station is a base station other than the source base station and the target base station.

The generation module is further configured to generate the first NH parameter according to an access security management entity key and a first synchronous input parameter. The first synchronous input parameter includes a first source base station key and a second NH parameter.

Optionally, in the foregoing solution, the receiving module 501 is further configured to receive the access security management entity key, the first source base station key, and the second NH parameter that are sent by the MME.

The sending module is further configured to send the second NH parameter to the source base station, so that the source base station determines, according to the second NH parameter, a key used by the target base station.

In the solution in the foregoing embodiment, further, the first source base station key may be determined by the MME according to the access security management entity key and a non-access stratum counter.

The second NH parameter may be determined by the MME according to the access security management entity key and a second synchronous input parameter.

Alternatively, in the solution in the foregoing embodiment, the generation module is further configured to generate the first NH parameter according to a second source base station key and a random number.

Optionally, the receiving module 501 is further configured to receive the second source base station key sent by the MME, where the second source base station key is determined by the MME according to an access security management entity key and a non-access stratum counter; or
the second source base station key is determined by the MME according to the access security management entity key and an identifier of the mobility anchor.

The mobility anchor provided in the solution in this embodiment may implement the path switching method that is performed by a mobility anchor and provided in any one of the foregoing embodiments. A specific implementation process and beneficial effects thereof are similar to those of the foregoing embodiments, and details are not described herein.

### Embodiment 6

A base station is provided in this embodiment of the present invention. FIG. 6 is a schematic structural diagram of a base station according to Embodiment 6 of the present invention. As shown in FIG. 6, the base station 600 includes:
a judgment module 601, configured to determine whether to switch a global path or to switch a local path; and
a sending module 602, configured to send a first path switch request message to a mobility anchor if a local path is to be switched, so that the mobility anchor keeps a user plane path between the mobility anchor and an SGW unchanged, and the mobility anchor switches a user plane path between the mobility anchor and a source base station to the target base station. The base station 600 is the target base station.

In the foregoing solution, the judgment module 601 is further configured to: determine, by comparing a quantity of switching times with a preset threshold, whether to switch a global path or to switch a local path, and determine to switch a global path if the quantity of switching times is greater than or equal to the preset threshold, or determine to switch a local path if the quantity of switching times is less than the preset threshold.

Optionally, in the foregoing solution, the base station 600 further includes:
a receiving module, configured to: before the judgment module 601 determines whether to switch a global path or to switch a local path, receive a switch request message sent by the source base station, where the switch request message includes an identifier of an anchor connected to the source base station.

Alternatively, in the foregoing solution, the judgment module 601 is further configured to: determine, by comparing the identifier of the anchor connected to the source base station with an identifier of the mobility anchor, whether to switch a global path or to switch a local path, and determine to switch a local path if the identifier of the anchor connected to the source base station is the same as the identifier of the mobility anchor, or determine to switch a global path if the identifier of the anchor connected to the source base station is different from the identifier of the mobility anchor.

Alternatively, in the foregoing solution, the switch request message includes an identifier of a base station cluster in which the source base station is located.

Correspondingly, the judgment module 601 is further configured to: determine, by comparing the identifier of the base station cluster in which the source base station is located with an identifier of a base station cluster in which the target base station is located, whether to switch a global path or to switch a local path, and determine to switch a local path if the identifier of the base station cluster in which the source base station is located is the same as the identifier of the base station cluster in which the target base station is located, or determine to switch a global path if the identifier of the base station cluster in which the source base station is located is different from the identifier of the base station cluster in which the target base station is located.

The receiving module is further configured to receive a first NH parameter sent by the mobility anchor by using a first path switch request acknowledgment message. The first NH parameter may be generated by the mobility anchor.

The base station 600 further includes:
a determining module, configured to determine, according to the first NH parameter, a key used by a next base station.

The next base station may be a base station other than the source base station and the target base station.

Optionally, the first NH parameter is a parameter obtained by the mobility anchor according to an access security management entity key and a first synchronous input parameter. The first synchronous input parameter includes a first source base station key and a second NH parameter. The access security management entity key, the first source base station key, and the second NH parameter are sent by an MME and received by the mobility anchor.

Optionally, the first source base station key is determined by the MME according to the access security management entity key and a non-access stratum counter.

The second NH parameter may be determined by the MME according to the access security management entity key and a second synchronous input parameter.

Based on the solution in the foregoing embodiment, alternatively, the first NH parameter may be a parameter determined by the mobility anchor according to a second source base station key and a random number.

Further, the second source base station key may be determined by an MME according to an access security management entity key and a non-access stratum counter; or
the second source base station key may be determined by an MME according to the access security management entity key and an identifier of the mobility anchor.

The sending module 602 is further configured to send a second path switch request message to the MME if a global path is to be switched, so as to trigger modification of the user plane path between the mobility anchor and the SGW.

The base station provided in this embodiment may implement the path switching method that is performed by a base station and provided in the foregoing embodiments. A specific implementation process and beneficial effects thereof are similar to those of the foregoing embodiments, and details are not described herein.

### Embodiment 7

A mobility anchor is provided in Embodiment 7 of the present invention. FIG. 7 is a schematic structural diagram of a mobility anchor according to Embodiment 7 of the present invention.

As shown in FIG. 7, the mobility anchor 700 includes a receiver 701, a processor 702, and a transmitter 703.

The receiver 701 is configured to receive a path switch request message sent by a target base station.

The processor 702 is configured to: if a local path is to be switched, keep a user plane path between the mobility anchor and an SGW unchanged, and switch a user plane path between the mobility anchor and a source base station to the target base station.

The transmitter 703 is further configured to send the path switch request message to the MME if a global path is to be switched, so as to trigger modification of the user plane path between the mobility anchor and the SGW.

Optionally, in the foregoing solution, the processor 702 is further configured to determine whether to switch a global path or to switch a local path.

The processor 702 in the foregoing solution is further configured to: determine, by comparing a quantity of switching times with a preset threshold, whether to switch a global path or to switch a local path, and determine to switch a global path if the quantity of switching times is greater than or equal to the preset threshold, or determine to switch a local path if the quantity of switching times is less than the preset threshold.

Optionally, the path switch request message includes an access identifier of UE, and the access identifier of the UE is an identifier allocated to the UE by an anchor device connected to the source base station.

Alternatively, the processor 702 is further configured to: determine, by retrieving the access identifier of the UE, whether to switch a global path or to switch a local path, and determine to switch a global path if the UE cannot be found according to the access identifier of the UE, or determine to switch a local path if the UE is found according to the access identifier of the UE.

Based on the solution in the foregoing embodiment, the processor 702 is further configured to generate a first next-hop NH parameter.

The transmitter 703 is further configured to send the first NH parameter to a target base station by using a path switch request acknowledgment message, so that the target base station determines, according to the first NH parameter, a key used by a next base station. The next base station is a base station other than the source base station and the target base station.

Optionally, the processor 702 is further configured to generate the first NH parameter according to an access security management entity key and a first synchronous input parameter, and the first synchronous input parameter includes a first source base station key and a second NH parameter.

The receiver 701 is further configured to receive the access security management entity key, the first source base station key, and the second NH parameter that are sent by the MME.

The transmitter 703 is further configured to send the second NH parameter to the source base station, so that the source base station determines, according to the second NH parameter, a key used by the target base station.

In the foregoing solution, the first source base station key is determined by the MME according to the access security management entity key and a non-access stratum counter.

The second NH parameter is determined by the MME according to the access security management entity key and a second synchronous input parameter.

Alternatively, the processor 702 in the solution in the foregoing embodiment is further configured to generate the first NH parameter according to a second source base station key and a random number.

The receiver 701 is further configured to receive the second source base station key sent by the MME, where the second source base station key is determined by the MME according to an access security management entity key and a non-access stratum counter; or
the second source base station key is determined by the MME according to the access security management entity key and an identifier of the mobility anchor.

The mobility anchor provided in the solution in this embodiment may implement the path switching method that is performed by a mobility anchor and provided in any one of the foregoing embodiments. A specific implementation process and beneficial effects thereof are similar to those of the foregoing embodiments, and details are not described herein.

### Embodiment 8

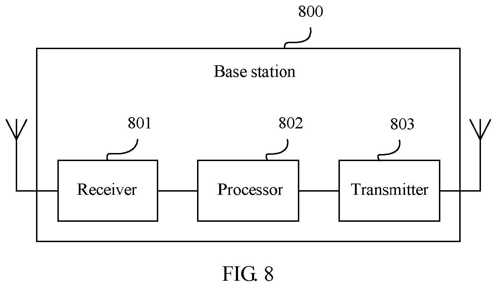

A base station is provided in Embodiment 8 of the present invention. FIG. 8 is a schematic structural diagram of a base station according to Embodiment 8 of the present invention.

As shown in FIG. 8, the base station 800 includes a receiver 801, a processor 802, and a transmitter 803.

The processor 802 is configured to determine whether to switch a global path or to switch a local path.

The transmitter 803 is configured to send a first path switch request message to a mobility anchor if a local path is to be switched, so that the mobility anchor keeps a user plane path between the mobility anchor and an SGW unchanged, and the mobility anchor switches a user plane path between the mobility anchor and a source base station to the target base station. The base station 800 is the target base station.

The processor 803 in the solution in the foregoing embodiment is further configured to: determine, by comparing a quantity of switching times with a preset threshold, whether to switch a global path or to switch a local path, and determine to switch a global path if the quantity of switching times is greater than or equal to the preset threshold, or determine to switch a local path if the quantity of switching times is less than the preset threshold.

Optionally, the receiver 801 is configured to: before the processor 802 determines whether to switch a global path or to switch a local path, receive a switch request message sent by the source base station. The switch request message includes an identifier of an anchor connected to the source base station.

The processor 802 is further configured to: determine, by comparing the identifier of the anchor connected to the source base station with an identifier of the mobility anchor, whether to switch a global path or to switch a local path, and determine to switch a local path if the identifier of the anchor connected to the source base station is the same as the identifier of the mobility anchor, or determine to switch a global path if the identifier of the anchor connected to the source base station is different from the identifier of the mobility anchor.

Alternatively, the switch request message includes an identifier of a base station cluster in which the source base station is located.

Correspondingly, the processor 802 is further configured to: determine, by comparing the identifier of the base station cluster in which the source base station is located with an identifier of a base station cluster in which the target base station is located, whether to switch a global path or to switch a local path, and determine to switch a local path if the identifier of the base station cluster in which the source base station is located is the same as the identifier of the base station cluster in which the target base station is located, or determine to switch a global path if the identifier of the base station cluster in which the source base station is located is different from the identifier of the base station cluster in which the target base station is located.

Based on the solution in the foregoing embodiment, the receiver 801 is further configured to receive a first NH parameter sent by the mobility anchor by using a first path switch request acknowledgment message, and the first NH parameter is generated by the mobility anchor.

The processor 802 is further configured to determine, according to the first NH parameter, a key used by a next base station, and the next base station is a base station other than the source base station and the target base station.

Optionally, the first NH parameter is a parameter obtained by the mobility anchor according to an access security management entity key and a first synchronous input parameter. The first synchronous input parameter includes a first source base station key and a second NH parameter. The access security management entity key, the first source base station key, and the second NH parameter may be sent by an MME and received by the mobility anchor.

Further, the first source base station key may be determined by the MME according to the access security management entity key and a non-access stratum counter.

The second NH parameter is determined by the MME according to the access security management entity key and a second synchronous input parameter.

Alternatively, the first NH parameter may be a parameter determined by the mobility anchor according to a second source base station key and a random number.

Optionally, the second source base station key is determined by an MME according to an access security management entity key and a non-access stratum counter; or
the second source base station key may be determined by an MME according to the access security management entity key and an identifier of the mobility anchor.

Based on the solution in the foregoing embodiment, the transmitter 803 is further configured to send a second path switch request message to the MME if a global path is to be switched, so as to trigger modification of the user plane path between the mobility anchor and the SGW.

The base station provided in the solution in this embodiment may implement the path switching method that is performed by a base station and provided in any one of the foregoing embodiments. A specific implementation process and beneficial effects thereof are similar to those of the foregoing embodiments, and details are not described herein.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

## Claims

1. A path switching method, comprising:
receiving (S101), by a mobility anchor, a path switch request message sent by a target base station;
keeping (S102), by the mobility anchor, a user plane path between the mobility anchor and a serving gateway SGW unchanged if the mobility anchor is to switch a local path; and
switching (S103), by the mobility anchor, a user plane path between the mobility anchor and a source base station to the target base station;
wherein the method is **characterised in that** the method further comprises:
generating (S301), by the mobility anchor, a first next-hop NH parameter; and
sending (S302), by the mobility anchor, the first NH parameter to the target base station by using a path switch request acknowledgment message, so that the target base station determines, according to the first NH parameter, a key used by a next base station, wherein the next base station is a base station other than the source base station and the target base station;
wherein
the generating, by the mobility anchor, a first NH parameter comprises:
generating, by the mobility anchor, the first NH parameter according to a second source base station key and a random number;
wherein the method further comprises:
receiving, by the mobility anchor, the second source base station key sent by the MME, wherein the second source base station key is determined by the MME according to an access security management entity key and a non-access stratum counter; or the second source base station key is determined by the MME according to the access security management entity key and an identifier of the mobility anchor.

2. The path switching method according to claim 1, further comprising:
determining (S401), by the target base station, whether to switch a global path or to switch a local path; and
sending (S402), by the target base station, the path switch request message to the mobility anchor, wherein path switch request message is a first path switch request message if the target base station is to switch a local path, so that the mobility anchor keeps a user plane path between the mobility anchor and the serving gateway SGW unchanged, and the mobility anchor switches the user plane path between the mobility anchor and the source base station to the target base station.

3. The method according to claim 1 or 2, wherein the method further comprises:
receiving (S403), by the target base station, the first NH parameter sent by the mobility anchor by using a first path switch request acknowledgment message, wherein the first NH parameter is generated by the mobility anchor; and
determining (S404), by the target base station according to the first NH parameter, the key used by the next base station, wherein the next base station is a base station other than the source base station and the target base station.

4. A communications system comprising a mobility anchor (500), the mobility anchor comprising:
a receiving module (501), configured to receive a path switch request message sent by a target base station;
a keeping module (502), configured to keep a user plane path between the mobility anchor and an SGW unchanged if a local path is to be switched;
a switching module (503), configured to switch a user plane path between the mobility anchor and a source base station to the target base station; and
a sending module, configured to send the path switch request message to an MME if a global path is to be switched, so as to trigger modification of the user plane path between the mobility anchor and the SGW;
wherein the communications system is **characterised in that,** the mobility anchor further comprises:
a generation module, configured to generate a first next-hop NH parameter; and
the sending module is further configured to send the first NH parameter to the target base station by using a path switch request acknowledgment message, so that the target base station determines, according to the first NH parameter, a key used by a next base station, wherein the next base station is a base station other than the source base station and the target base station;
wherein:
the generation module is further configured to generate the first NH parameter according to a second source base station key and a random number;
wherein:
the receiving module is further configured to receive the second source base station key sent by the MME, wherein
the second source base station key is determined by the MME according to an access security management entity key and a non-access stratum counter; or the second source base station key is determined by the MME according to the access security management entity key and an identifier of the mobility anchor.

5. The communications system according to claim 4 further comprising a base station, wherein the base station is the target base station and comprises:
a judgment module (601), configured to determine whether to switch a global path or to switch a local path; and
a sending module (602), configured to send the path switch request message to the mobility anchor, wherein the path switch request message is a first path switch request message if a local path is to be switched, so that the mobility anchor keeps the user plane path between the mobility anchor and an SGW unchanged, and the mobility anchor switches the user plane path between the mobility anchor and the source base station to the target base station.

6. The communications system according to claim 4 or 5, wherein:
the base station is further configured to receive the first NH parameter sent by the mobility anchor by using the first path switch request acknowledgment message, wherein the first NH parameter is generated by the mobility anchor; and
the base station further comprises:
a determining module, configured to determine, according to the first NH parameter, a key used by a next base station, wherein the next base station is a base station other than the source base station and the target base station.

## Patentansprüche

1. Pfadwechselverfahren, das Folgendes umfasst:
Empfangen (S101) durch einen Mobilitätsanker einer Pfadwechselanforderungsnachricht, die durch eine Zielbasisstation gesendet wurde;
Beibehalten (S102) durch den Mobilitätsanker eines Anwenderebenenpfads zwischen dem Mobilitätsanker und einem dienenden Gateway, SGW, wenn der Mobilitätsanker einen lokalen Pfad ändern soll; und
Wechseln (S103) durch den Mobilitätsanker eines Anwenderebenenpfads zwischen dem Mobilitätsanker und einer Quellbasisstation zur Zielbasisstation;
wobei das Verfahren **dadurch gekennzeichnet ist, dass** es ferner Folgendes umfasst:
Erzeugen (S301) durch den Mobilitätsanker eines ersten Parameters einer nächsten Teilstrecke, NH-Parameter; und
Senden (S302) durch den Mobilitätsanker des ersten NH-Parameters zur Zielbasisstation unter Verwendung einer Pfadwechselanforderungsbestätigungsnachricht, derart, dass die Zielbasisstation gemäß dem ersten NH-Parameter einen Schlüssel bestimmt, der durch eine nächste Basisstation verwendet wird, wobei die nächste Basisstation eine Basisstation außer der Quellbasisstation und der Zielbasisstation ist, wobei
das Erzeugen durch den Mobilitätsanker eines ersten NH-Parameters Folgendes umfasst:
Erzeugen durch den Mobilitätsanker des ersten NH-Parameters gemäß einem zweiten Quellbasisstationsschlüssel und einer Zufallszahl; wobei
das Verfahren ferner Folgendes umfasst:
Empfangen durch den Mobilitätsanker des zweiten Quellbasisstationsschlüssels, der durch die MME gesendet wurde, wobei der zweite Quellbasisstationsschlüssel durch die MME gemäß einem Zugriffssicherheitsmanagementeinheitschlüssel und einem Nichtzugriffsstratumzähler bestimmt wird oder der zweite Quellbasisstationsschlüssel durch die MME gemäß dem Zugriffssicherheitsmanagementeinheitschlüssel und einer Kennung des Mobilitätsankers bestimmt wird.

2. Pfadwechselverfahren nach Anspruch 1, das ferner Folgendes umfasst:
Bestimmen (S401) durch die Zielbasisstation, ob ein globaler Pfad gewechselt werden soll oder ein lokaler Pfad gewechselt werden soll; und
Senden (S402) durch die Zielbasisstation der Pfadwechselanforderungsnachricht zum Mobilitätsanker, wobei die Pfadwechselanforderungsnachricht eine erste Pfadwechselanforderungsnachricht ist, wenn die Zielbasisstation einen lokalen Pfad wechseln soll, derart, dass der Mobilitätsanker einen Anwenderebenenpfad zwischen dem Mobilitätsanker und dem dienenden Gateway, SGW, beibehält und der Mobilitätsanker den Anwenderebenenpfad zwischen dem Mobilitätsanker und der Quellbasisstation zur Zielbasisstation wechselt.

3. Verfahren nach Anspruch 1 oder 2, wobei das Verfahren ferner Folgendes umfasst:
Empfangen (S403) durch die Zielbasisstation des ersten NH-Parameters, der durch den Mobilitätsanker unter Verwendung einer ersten Pfadwechselanforderungsbestätigungsnachricht gesendet wurde, wobei der erste NH-Parameter durch den Mobilitätsanker erzeugt wird; und
Bestimmen (S404) durch die Zielbasisstation gemäß dem ersten NH-Parameter des Schlüssels, der durch die nächste Basisstation verwendet wird, wobei die nächste Basisstation eine Basisstation außer der Quellbasisstation und der Zielbasisstation ist.

4. Kommunikationssystem, das einen Mobilitätsanker (500) umfasst, wobei der Mobilitätsanker Folgendes umfasst:
ein Empfangsmodul (501), das konfiguriert ist zum Empfangen einer Pfadwechselanforderungsnachricht, die durch eine Zielbasisstation gesendet wurde;
ein Beibehaltemodul (502), das konfiguriert ist zum Beibehalten eines Anwenderebenenpfads zwischen dem Mobilitätsanker und einem SGW, wenn ein lokaler Pfad geändert werden soll;
ein Wechselmodul (503), das konfiguriert ist zum Wechseln eines Anwenderebenenpfads zwischen dem Mobilitätsanker und einer Quellbasisstation zur Zielbasisstation; und
ein Sendemodul, das konfiguriert ist zum Senden der Pfadwechselanforderungsnachricht zu einem MME, wenn ein globaler Pfad gewechselt werden soll, um eine Änderung des Anwenderebenenpfads zwischen dem Mobilitätsanker und dem SGW auszulösen; wobei
das Kommunikationssystem **dadurch gekennzeichnet ist, dass** der Mobilitätsanker ferner Folgendes umfasst:
ein Erzeugungsmodul, das konfiguriert ist zum Erzeugen eines ersten Parameters einer nächsten Teilstrecke, NH-Parameter; und
das Sendemodul ferner konfiguriert ist zum Senden des ersten NH-Parameters zur Zielbasisstation unter Verwendung einer Pfadwechselanforderungsbestätigungsnachricht, derart, dass die Zielbasisstation gemäß dem ersten NH-Parameter einen Schlüssel bestimmt, der durch eine nächste Basisstation verwendet wird, wobei die nächste Basisstation eine Basisstation außer der Quellbasisstation und der Zielbasisstation ist; wobei
das Erzeugungsmodul ferner konfiguriert ist zum Erzeugen des ersten NH-Parameters gemäß einem zweiten Quellbasisstationsschlüssel und einer Zufallszahl;
das Empfangsmodul ferner konfiguriert ist zum Empfangen des zweiten Quellbasisstationsschlüssels, der durch die MME gesendet wurde, und
der zweite Quellbasisstationsschlüssel durch die MME gemäß einem Zugriffssicherheitsmanagementeinheitschlüssel und einem Nichtzugriffsstratumzähler bestimmt wird oder der zweite Quellbasisstationsschlüssel durch die MME gemäß dem Zugriffssicherheitsmanagementeinheitschlüssel und einer Kennung des Mobilitätsankers bestimmt wird.

5. Kommunikationssystem nach Anspruch 4, das ferner eine Basisstation umfasst, wobei die Basisstation die Zielbasisstation ist und Folgendes umfasst:
ein Beurteilungsmodul (601), das konfiguriert ist zum Bestimmen, ob ein globaler Pfad gewechselt werden soll oder ein lokaler Pfad gewechselt werden soll; und
ein Sendemodul (602), das konfiguriert ist zum Senden der Pfadwechselanforderungsnachricht zum Mobilitätsanker, wobei die Pfadwechselanforderungsnachricht eine erste Pfadwechselanforderungsnachricht ist,
wenn ein lokaler Pfad gewechselt werden soll, derart, dass der Mobilitätsanker den Anwenderebenenpfad zwischen dem Mobilitätsanker und einem SGW beibehält und
der Mobilitätsanker den Anwenderebenenpfad zwischen dem Mobilitätsanker und der Quellbasisstation zur Zielbasisstation wechselt.

6. Kommunikationssystem nach Anspruch 4 oder 5, wobei
die Basisstation ferner konfiguriert ist zum Empfangen des ersten NH-Parameters, der durch den Mobilitätsanker unter Verwendung der ersten Pfadwechselanforderungsbestätigungsnachricht gesendet wurde, wobei der erste NH-Parameter durch den Mobilitätsanker erzeugt wird; und
die Basisstation ferner Folgendes umfasst:
ein Bestimmungsmodul, das konfiguriert ist, zum Bestimmen gemäß dem ersten NH-Parameter eines Schlüssels, der durch eine nächste Basisstation verwendet wird, wobei die nächste Basisstation eine Basisstation außer der Quellbasisstation und der Zielbasisstation ist.

## Revendications

1. Procédé de commutation de trajet, comprenant :
la réception (S 101), par un ancrage de mobilité, d'un message de requête de commutation de trajet envoyé par une station de base cible ;
le maintien (S102), par l'ancrage de mobilité, d'un trajet de plan utilisateur entre l'ancrage de mobilité et une passerelle de desserte SGW inchangé si l'ancrage de mobilité doit commuter un trajet local ; et
la commutation (S103), par l'ancrage de mobilité, d'un trajet de plan utilisateur entre l'ancrage de mobilité et une station de base source vers la station de base cible ;
le procédé étant **caractérisé en ce qu'**il comprend en outre :
la génération (S301), par l'ancrage de mobilité, d'un premier paramètre de bond suivant NH; et
l'envoi (S302), par l'ancrage de mobilité, du premier paramètre NH à la station de base cible au moyen d'un message d'acquittement de requête de commutation de trajet, de telle sorte que la station de base cible détermine, conformément au premier paramètre NH, une clé utilisée par une station de base suivante, la station de base suivante étant une station de base autre que la station de base source et la station de base cible ;
dans lequel
la génération, par l'ancrage de mobilité, d'un premier paramètre NH comprend :
la génération, par l'ancrage de mobilité, du premier paramètre NH conformément à une seconde clé de station de base source et un nombre aléatoire ;
le procédé comprenant en outre :
la réception, par l'ancrage de mobilité, de la seconde clé de station de base source envoyée par la MME, la seconde clé de station de base source étant déterminée par la MME conformément à une clé d'entité de gestion de sécurité d'accès et un compteur de couche non d'accès ; ou la seconde clé de station de base source étant déterminée par la MME conformément à la clé d'entité de gestion de sécurité d'accès et à un identifiant de l'ancrage de mobilité.

2. Procédé de commutation de trajet selon la revendication 1, comprenant en outre :
la détermination (S401), par la station de base cible, qu'il convient de commuter un trajet global ou de commuter un trajet local ; et
l'envoi (S402), par la station de base cible, du message de requête de commutation de trajet à l'ancrage de mobilité, le message de requête de commutation de trajet étant un premier message de requête de commutation de trajet si la station de base cible doit commuter un trajet local, de telle sorte que l'ancrage de mobilité maintienne inchangé un trajet de plan utilisateur entre l'ancrage de mobilité et la passerelle de desserte SGW,
et l'ancrage de mobilité commute le trajet de plan utilisateur entre l'ancrage de mobilité et la station de base source vers la station de base cible.

3. Procédé selon la revendication 1 ou 2, le procédé comprenant en outre :
la réception (S403), par la station de base cible, du premier paramètre NH envoyé par l'ancrage de mobilité en utilisant un premier message d'acquittement de requête de commutation de trajet, le premier paramètre NH étant généré par l'ancrage de mobilité ;
et
la détermination (S404), par la station de base cible conformément au premier paramètre NH, de la clé utilisée par la station de base suivante, la station de base suivante étant une station de base autre que la station de base source et la station de base cible.

4. Système de communication comprenant un ancrage de mobilité (500), l'ancrage de mobilité comprenant :
un module de réception (501), configuré pour recevoir un message de requête de commutation de trajet envoyé par une station de base cible ;
un module de maintien (502), configuré pour maintenir inchangé un trajet de plan utilisateur entre l'ancrage de mobilité et une SGW si un trajet local doit être commuté ;
un module de commutation (503), configuré pour commuter un trajet de plan utilisateur entre l'ancrage de mobilité et une station de base source vers la station de base cible ; et
un module d'envoi, configuré pour envoyer le message de requête de commutation de trajet à une MME si un trajet global doit être commuté, de manière à déclencher une modification du trajet de plan utilisateur entre l'ancrage de mobilité et la SGW ;
le système de communication étant **caractérisé en ce que** l'ancrage de mobilité comprend en outre :
un module de génération, configuré pour générer un premier paramètre NH ; et
le module d'envoi est configuré en outre pour envoyer le premier paramètre NH à la station de base cible à l'aide d'un message d'acquittement de requête de commutation de trajet, de telle sorte que la station de base cible détermine, conformément au premier paramètre NH, une clé utilisée par une station de base suivante, la station de base suivante étant une station de base autre que la station de base source et la station de base cible ;
dans lequel :
le module de génération est configuré en outre pour générer le premier paramètre NH conformément à une seconde clé de station de base source et un nombre aléatoire ;
dans lequel :
le module de réception est configuré en outre pour recevoir la seconde clé de station de base source envoyée par la MME,
la seconde clé de station de base source étant déterminée par la MME conformément à une clé d'entité de gestion de sécurité d'accès et un compteur de couche non d'accès ;
ou la seconde clé de station de base source étant déterminée par la MME conformément à la clé d'entité de gestion de sécurité d'accès et à un identifiant de l'ancrage de mobilité.

5. Système de communication selon la revendication 4 comprenant en outre une station de base, la station de base étant la station de base cible et comprenant :
un module de jugement (601), configuré pour déterminer qu'il convient de commuter un trajet global ou de commuter un trajet local ; et
un module d'envoi (602), configuré pour envoyer le message de requête de commutation de trajet à l'ancrage de mobilité, le message de requête de commutation de trajet étant un premier message de requête de commutation de trajet si un trajet local doit être commuté, de telle sorte que l'ancrage de mobilité maintienne inchangé le trajet de plan utilisateur entre l'ancrage de mobilité et une SGW, et l'ancrage de mobilité commute le trajet de plan utilisateur entre l'ancrage de mobilité et la station de base source vers la station de base cible.

6. Système de communication selon la revendication 4 ou 5, dans lequel :
la station de base est configurée en outre pour recevoir le premier paramètre NH envoyé par l'ancrage de mobilité en utilisant le premier message d'acquittement de requête de commutation de trajet, le premier paramètre NH étant généré par l'ancrage de mobilité ; et
la station de base comprend en outre :
un module de détermination, configuré pour déterminer, conformément au premier paramètre NH, une clé utilisée par une station de base suivante, la station de base suivant étant une station de base autre que la station de base source et la station de base cible.
